(19) Europäisches Patentamt
European Patent Office
Office européen des brevets

(11) Veröffentlichungsnummer: **0 451 352 A2**

(12) # EUROPÄISCHE PATENTANMELDUNG

(21) Anmeldenummer: **90123935.0**

(22) Anmeldetag: **12.12.90**

(51) Int. Cl.⁵: **C08G 18/08**, C08G 18/62, C09D 191/06

(30) Priorität: **12.04.90 DE 4011832**

(43) Veröffentlichungstag der Anmeldung: **16.10.91 Patentblatt 91/42**

(84) Benannte Vertragsstaaten: **BE DE ES FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Kühnle, Adolf, Dr.**
**Hoechster Strasse 6**
**W-4370 Marl(DE)**
Erfinder: **Schrenk, Volker, Dr.**
**Meissener Strasse 27**
**W-4600 Dortmund(DE)**
Erfinder: **Vey, Marlies**
**Tulpenstrasse 5**
**W-4370 Marl(DE)**
Erfinder: **Wolf, Elmar, Dr.**
**Stauffenbergstrasse 7**
**W-4350 Recklinghausen(DE)**

(54) **Verfahren zur Herstellung kationaktiver Wachse.**

(57) Ziel der Erfindung ist, in Wachsoxidate eine größere Anzahl von kationaktiven Gruppen als bisher möglich einzuführen und in schonender Reaktion ein helles Produkt zu erhalten. Dies wird dadurch erreicht, daß das Wachsoxidat, ggf. nach vorheriger Veresterung mit mehrwertigen Alkoholen, zunächst mit einem mehrwertigen Isocyanat und danach mit einem N,N-Dialkylethanolamin umgesetzt wird. Nach Neutralisieren, Quarternisieren o. ä. lassen sich Emulsionen mit stark substantivem Charakter herstellen, die sich für Lackierungs- und Beschichtungszwecke eignen.

EP 0 451 352 A2

Gegenstand der Erfindung sind ein Verfahren zur Herstellung kationaktiver Wachse, die nach diesem Verfahren hergestellten kationaktiven Wachse sowie reaktive Wachse, die als isolierbare Zwischenprodukte entstehen.

Kationaktive Wachse auf Basis von Polyethylen werden beschrieben in DE-AS 12 35 590, DE-OS 23 08 222 sowie DE-PS 36 29 149, DE-PS 36 29 147, DE-PS 36 29 167 und DE-PS 36 24 546. Diesen Produkten ist gemeinsam, daß sie aus Oxidaten eines Polyethylens in der Weise hergestellt werden, daß man die Carbonsäuregruppen dieser Oxidate entweder mit der Hydroxylgruppe eines tertiären Alkanolamins verestert oder sie mit einer primären Aminogruppe eines Polyamins amidiert, z. B.

Polyethylenwachskette

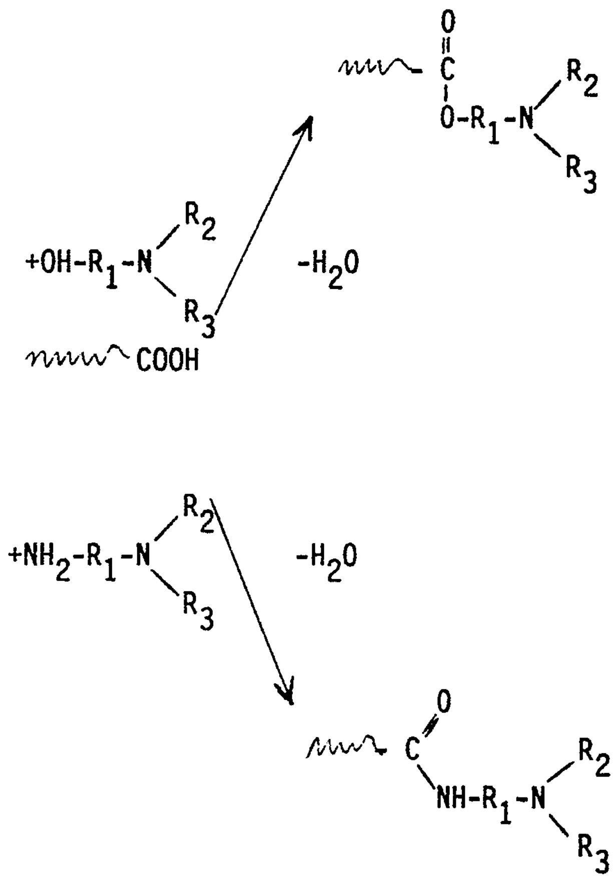


wobei $R_1$, $R_2$, $R_3$ = geradkettige oder verzweigte, gegebenenfalls substituierte Alkyl- oder Alkenylreste.

Die auf diese Weise hergestellten Produkte besitzen jedoch folgende Nachteile:

a) Die Umsetzung verläuft aufgrund der damit verbundenen Wasserabspaltung langsam und dauert erfahrungsgemäß mehrere Stunden. Die außerordentlich lange thermische Belastung der verwendeten Amine führt zu unerwünschten Braunverfärbungen im Endprodukt, weswegen die DE-AS 12 35 590 die Überlagerung mit Stickstoff ausdrücklich empfiehlt.

b) Die Methoden bieten wenig Möglichkeiten, das als Ausgangsprodukt eingesetzte Wachs durch diese Umsetzung in seinen Eigenschaften wie Z. B. Tropfpunkt, Härte und Viskostät entscheidend Zu verändern.

c) Zur Einführung der kationaktiven Gruppen können nur die Carboxylgruppen des Polyethylenoxidates, nicht aber die bei der Oxidation ebenfalls entstehenden Hydroxylgruppen ausgenutzt werden. Da sich Polyethylene erfahrungsgemäß allenfalls bis zu einer Säurezahl von Ca. 60 - 80 mg KOH/g Wachs oxidieren lassen, ohne daß es in verstärktem Umfang zu Abbaureaktionen kommt, ist die Anzahl der einführbaren tertiären Aminogruppen somit begrenzt.

Die erfindungsgemäßen Produkte weisen diese Nachteile nicht auf.

Zur Herstellung der erfindungsgemäßen kationaktiven Wachse werden entweder Fischer-Tropsch- oder Polyethylenoxidate eingesetzt, die ggf. auch teilverseift sein können. Derartige Oxidate enthalten bekannterweise neben Carbonsäure- und Estergruppen auch Hydroxylgruppen.

Insbesondere sind die aus diesen Oxidaten durch Veresterung mit mehrwertigen Alkoholen z. B. gemäß EP-OS 0 170 014 hergestellten, zusätzlich freie Hydroxylgruppen enthaltenden Wachsester geeignet.

Sowohl die Fischer-Tropsch- als auch die Polyethylenoxidate sowie deren Ester sind von heller Farbe und besitzen Molekulargewichte Mn zwischen 400 und 2000, insbesondere aber zwischen 400 und 1200. Die Tropfpunkte liegen zwischen 80 und 140 °C, vorzugsweise zwischen 90 und 120 °C, die Säurezahlen zwischen 0 und 50 mg KOH/g Wachs, die Hydroxylzahlen zwischen 5 und Ca. 200, vorzugsweise zwischen 10 und 100 mg KOH/g Wachs. Grundsätzlich kommen aber auch Hydroxylwachse für einen Einsatz in Betracht, bei denen für die Einführung der Hydroxylgruppe in das synthetische Kohlenwasserstoffwachs andere Verfahrensschritte als oben beschrieben zur Anwendung kommen. Voraussetzung ist aber auch hier, daß die Molekulargewichte zwischen 400 und 2000 und die Hydroxylzahlen zwischen 5 und 200, vorzugsweise zwischen 10 und 100 liegen.

Das erfindungsgemäße Verfahren ist durch folgende Schritte gekennzeichnet:

I. Zunächst wird ein derartiges Wachsoxidat mit einem zwei- oder höherwertigen Isocyanat umgesetzt. Man erhält ein isocyanatgruppentragendes, reaktives Wachs. Im bevorzugtem Bereich variiert das Molverhältnis (OH + COOH) Zu mehrwertigem Isocyanat zwischen 0,8:1 und 1,2:1.

II. Dieses reaktive Wachs kann mit einem N,N-Dialkylethanolamin umgesetzt und nach Neutralisieren, Quarternisieren oder Oxidieren zum Aminoxid kationogen in Wasser emulgiert werden. Das Verhältnis freier Isocyanatgruppen zu Dialkylethanolamin liegt bevorzugt zwischen 0,8:1 und 1,2:1.

Die Umsetzung der üblicherweise hellgefärbten, hydroxylgruppenhaltigen Wachsoxidate mit dem zwei- oder höherwertigen Isocyanat wird vorzugsweise in der Schmelze durchgeführt. Der sinnvolle Temperaturbereich beträgt hierbei 120 - 180 °C, obwohl man selbstverständlich auch in Lösung bei Temperaturen etwa um Raumtemperatur arbeiten kann. Neben einer verlängerten Reaktionszeit nimmt man hierbei jedoch die nötige Entfernung des Lösemittels in Kauf. In Fallen, in denen dieses isocyanatgruppentragende, reaktive Wachs nicht entsprechend der Stufe

II weiter umgesetzt werden soll, sondern direkt als Anstrich- oder Imprägnierungsmittel verwendet wird, ist es jedoch unter Umständen erwünscht, das Produkt in gelöster Form Zu erhalten.

Beim Arbeiten in der Schmelze verläuft die Reaktion in den meisten Fällen so schnell, daß sie nach wenigen Minuten beendet ist. Als geeignete zwei- oder höherwertige Isocyanate können beispielsweise eingesetzt werden:

3-Isocyanatomethyl-3,5,5-trimethylcyclohexylisocyanat (Isophorondiisocyanat; IPDI);
trimerisiertes Isophorondiisocyanat (z. B. IPDI T 1890 der Firma HÜLS AG, D-4370 Marl);
Hexamethylendiisocyanat;
trimerisiertes Hexamethylendiisocyanat (z. B. DESMODUR$^R$ N 3300 der Firma BAYER AG, D-5090 Leverkusen);
2.2.4- bzw. 2.2.6-Trimethylhexan-1.6-diisocyanat oder dessen Trimeres;
2.6- und/oder 2.4-Toluylendiisocyanat;
Naphthylen-1.5-diisocyanat;
m-Xylylen-diisocyanat;
p- bzw. m-Tetramethylxylylen-diisocyanat;
p-Phenylendiisocyanat.

Weitere, im Rahmen dieser Erfindung einsetzbare Isocyanate sind in Houben-Weyl, "Methoden der Organischen Chemie", Bd. 14/2, Seite 61 bis 70, Thieme Verlag, Stuttgart, 1963, aufgeführt. Aliphatische Isocyanate sind bevorzugt.

Diese Isocyanate binden an die in den erfindungsgemäß verwendeten Wachsen enthaltenen Hydroxyl- oder Carboxylgruppen an; überraschenderweise werden hierbei praktisch keine Vernetzungserscheinungen beobachtet.

Da nun bekannterweise Hydroxylgruppen gegenüber Isocyanatgruppen reaktiver als Carboxylgruppen sind, ist es von Vorteil, die Carbonsäuregruppen vorher mit mehrwertigen Alkoholen wie z. B. Diolen oder Triolen umzusetzen. Bei der anschließenden Reaktion mit den zwei- oder höherwertigen Isocyanaten erhält man in glatter Reaktion Produkte hoher Funktionalität.

Das nach der Umsetzung mit dem Isocyanat erhaltene Zwischenprodukt kann beispielsweise als reaktives Wachs in Schmelzklebstoffen und Lacken, als Beschichtungsmittel für Füllstoffe (z. B. Kieselsäure), als Verträglichkeitsvermittler in Kunststoffblends oder als Hilfsmittel zur Verbesserung der Anfärbbarkeit von Kunststoffen verwendet werden. Das Wachs kann aber auch direkt mit tertiären Alkanolaminen wie z. B. N,N-Diethylaminoethanol (DEAE) Zu kationaktiven Wachsen weiter umgesetzt werden. Auch diese Reaktion läuft meist schnell ab und ist nach wenigen Minuten beendet.

Nie das o. g. reaktive Wachs kann das Reaktionsprodukt in Schmelzklebstoffen, Lacken, Füllstoffen und Kunststoffen verwendet werden. Das Reaktionsprodukt kann aber auch mit Säuren wie z. B. Essigsäure ohne weitere Zusätze kationogen emulgiert werden. Man kann es weiterhin nach den bekannten Verfahren, wie sie u. a. auch die DE-AS 12 35 590 oder die DE-PS 36 29 149 beschreiben, quarternisieren. Als weitere

Reaktionsmöglichkeit kommt die Oxidation des tertiären Amins Zu einem Aminoxid mit einem Oxidationsmittel wie Z. B. Wasserstoffperoxid in Betracht.

Die aus den kationaktiven Wachsen hergestellten Dispersionen bzw. Emulsionen besitzen einen stark ausgeprägten substantiven Charakter und eignen sich beispielsweise für die Glasbeschichtung und für die Vergütung von Glasoberflächen. Sie lassen sich einsetzen in kationisch abscheidbaren Elektrotauchlacken. Ebenso lassen sie sich als Zusatz in Flockungsmitteln, für die Imprägnierung von Holz und Textilien sowie für die Beschichtung anderer Substrate wie Z. B. Papier-, Metall- und Kunststoffoberflächen verwenden. Die Emulsionen sind - sofern sie Z. B. mit Ammoniak nahezu neutral eingestellt werden - auch für die Herstellung leicht desagglomerierender Füllstoffagglomerate, z. B. auf Calciumcarbonatbasis, geeignet.

Die Eigenschaften der Reaktionsprodukte werden in an sich bekannter Weise durch die jeweils zum Einsatz kommenden Isocyanate maßgeblich beeinflußt. Je nach Isocyanat werden sowohl extrem harte als auch relativ weiche Endprodukte erhalten. Ähnliches gilt für die Wasserbeständigkeit der hieraus resultierenden Filme. Die aus der Schmelze oder über wässerige Systeme aufgetragenen Beschichtungen bzw. Filme sind gegenüber Wasser mit pH-Werten über 7 resistent, während sie von Säuren je nach Zusammensetzung mehr oder weniger stark angelöst werden.

Die Erfindung wird durch die folgenden Beispiele verdeutlicht.

Beispiele

Folgende Wachse wurden als Ausgangsprodukt verwendet:

Wachs A

Fischer-Tropsch-Oxidat, hergestellt durch Oxidation eines Fischer-Tropsch-Hartparaffins mit einem Molekulargewicht (Mn) von 700

| | | |
|---|---|---|
| Tropfpunkt | 99 | °C |
| Penetrationszahl | 4 | $mm.10^{-1}$ |
| Säurezahl | 29 | mg KOH/g |
| Hydroxylzahl | 28 | mg KOH/g |
| Viskosität bei 120 °C | < 20 | mPas |
| Farbe | weiß | |

Wachs B

Wachs A. verestert mit Butandiol-1,4 bei 180 °C unter Verwendung von 0.5 % Zinkstearat

| | | |
|---|---|---|
| Tropfpunkt | 99 | °C |
| Penetrationszahl | 5 | $mm.10^{-1}$ |
| Säurezahl | 3 | mg KOH/g |
| Hydroxylzahl | 54 | mg KOH/g |
| Viskosität bei 120 °C | < 20 | mPas |
| Farbe | fast weiß | |

Wachs C

Fischer-Tropsch-Oxidat, hergestellt durch Oxidation eines Fischer-Tropsch-Hartparaffins mit einem Molekulargewicht (Mn) von 700

| | | |
|---|---|---|
| Tropfpunkt | 101 | °C |
| Penetrationszahl | 2 | $mm.10^{-1}$ |
| Säurezahl | 16 | mg KOH/g |
| Hydroxylzahl | 19 | mg KOH/g |
| Viskosität bei 120 °C | < 20 | mPas |
| Farbe | weiß | |

Wachs D

Wachs C, verestert mit Butandiol-1,4 bei 180 °C unter Verwendung von 0,5 % Zinkstearat

| | | |
|---|---|---|
| Tropfpunkt | 103 | °C |
| Penetrationszahl | 2 | $mm.10^{-1}$ |
| Säurezahl | 4 | mg KOH/g |
| Hydroxylzahl | 32 | mg KOH/g |
| Viskosität bei 120 °C | < 20 | mPas |
| Farbe | fast weiß | |

Wachs E

Fischer-Tropsch-Oxidat, hergestellt durch Oxidation eines Fischer-Tropsch-Hartparaffins mit einem Molekulargewicht (Mn) von 750

| | | |
|---|---|---|
| Tropfpunkt | 105 | °C |
| Penetrationszahl | 1 | $mm.10^{-1}$ |
| Säurezahl | 13 | mg KOH/g |
| Hydroxylzahl | 14 | mg KOH/g |
| Viskosität bei 120 °C | < 20 | mPas |
| Farbe | weiß | |

Wachs F

Wachs E. verestert mit Butandiol-1.4 bei 170 °C unter Verwendung von 0.5 % Zinkstearat

| | | |
|---|---|---|
| Tropfpunkt | 105 | °C |
| Penetrationszahl | 2 | $mm.10^{-1}$ |
| Säurezahl | 3 | mg KOH/g |
| Hydroxylzahl | 24 | mg KOH/g |
| Viskosität bei 120 °C | < 20 | mPas |
| Farbe | fast weiß | |

Wachs G

Polyethylenoxidat, hergestellt durch Oxidation eines Polyethylens mit einer Dichte von 0,95 g/cm³, einem Tropfpunkt von 102 °C und einem Molekulargewicht (Mn) von 750

| | | |
|---|---|---|
| Tropfpunkt | 98 | °C |
| Penetrationszahl | 5 | $mm.10^{-1}$ |
| Säurezahl | 28 | mg KOH/g |
| Hydroxylzahl | 27 | mg KOH/g |
| Viskosität bei 120 °C | < 50 | mPas |
| Farbe | weiß | |

Wachs H

Wachs G. verestert mit Butandiol-1.4 bei 180 °C unter Verwendung von 0.5 % Zinkstearat

| | | |
|---|---|---|
| Tropfpunkt | 97 | °C |
| Penetrationszahl | 5 | $mm.10^{-1}$ |
| Säurezahl | 4 | mg KOH/g |
| Hydroxylzahl | 51 | mg KOH/g |
| Viskosität bei 120 °C | < 50 | mPas |
| Farbe | fast weiß | |

Diese Wachse wurden - in einem Fall unter Verwendung geringer Mengen des Katalysators Dibutylzinnlaurat (abgekürzt: DBTL) - mit folgenden mehrwertigen Isocyanaten umgesetzt:

- Isophorondiisocyanat (abgekürzt: IPDI)
- trimerisiertes Isophorondiisocyanat (abgekürzt: IPDI T 1890)
- trimerisiertes Hexamethylendiisocyanat (abgekürzt: N 3300) Als Alkanolamin wurde N,N-Diethylaminoethanol (abgekürzt: DEAE) verwendet.

Beispiel 1

a) Herstellung des kationaktiven Wachses

2050 g Wachs B werden in einem mit Rührer, Tropftrichter und Rückflußküler versehenen Dreihalskolben mit 412 g IPDI unter Verwendung von 0,1 % DBTL bei 130 °C umgesetzt, wobei die IPDI-Zugabe

innerhalb eines Zeitraumes von 10 Minuten erfolgt. Danach wird 30 Minuten lang bei 130 °C weitergerührt und anschließend 15 Minuten lang das nicht umgesetzte IPDI durch Anlegen eines Vakuums entfernt. Nach Zugabe von 227 g Diethylaminoethanol (DEAE) wird die Temperatur auf 170 °C erhöht. Man läßt 1 Stunde weiterreagieren und entfernt ggf. nicht umgesetztes DEAE durch Anlegen eines Vakuums.

Das gelbe Endprodukt besitzt einen Tropfpunkt von 97 °C, eine Penetrationszahl von 5 $mm.10^{-1}$ sowie eine Viskosität (bei 120 °C) von 60 mPas.

b) Herstellung der kationogenen Wachsemulsion

45 g des unter 2 a) hergestellten Wachses werden aufgeschmolzen und bei 120 - 130 °C mit 18 g Eisessig umgesetzt. Anschließend wird "Wachs zu Wasser" emulgiert, d. h. man läßt die Ca. 120 °C heiße Wachsschmelze unter Rühren in 240 ml siedendes Wasser einlaufen und kühlt unter weiterem Rühren auf Raumtemperatur ab.

Man erhält eine feinteilige leicht transparente kationogene Wachsemulsion.

## Beispiel 2

a) Herstellung des kationaktiven Wachses

3100 g Wachs B werden in einem mit einem Rührer versehenen Rundkolben mit 2058 g IPDI T 1890 in der Schmelze bei 130 °C umgesetzt. Man läßt 30 Minuten reagieren und gibt dann bei derselben Temperatur 723 g DEAE dazu und rührt 30 Minuten lang weiter.

Das gelbe Endprodukt besitzt einen Tropfpunkt von 101 °C, eine Penetrationszahl von < 1 $mm.10^{-1}$ und eine Viskosität (bei 120 °C) von 350 mPas.

b) Herstellung der kationogenen Wachsemulsion

45 g des unter 2 a) hergestellten Wachses werden aufgeschmolzen und bei 130 °C mit 18 g Eisessig umgesetzt. Anschließend wird wie in 1 b) "Wachs zu Wasser" (Wassermenge: 240 ml) emulgiert. Man erhält eine hochtransparente, fast wasserklare kationogene Wachsemulsion.

## Beispiel 3

Man verwendet dieselben Komponenten wie in Beispiel 2 a), nur daß man jetzt 22,5 g Wachs B gemeinsam mit 17,1 g IPDI T 1890 in einer Kasserolle aufschmilzt und 2 Minuten lang bei 130 °C rührt. Danach werden 5,4 9 DEAE zugegeben und die Reaktionsmischung 2 Minuten lang weitergerührt. Danach kann das Reaktionsprodukt, das im Unterschied zu 2 a) eine wesentlich hellere Farbe (hellgelb) besitzt, entweder isoliert oder es kann sofort - wie in 1 b) beschrieben - mit 18 g Eisessig und 240 ml Wasser "Wachs zu Wasser" emulgiert werden. Im letzteren Fall erhält man wie in 2 b) eine hochtransparente, fast wasserklare, kationogene Wachsemulsion.

## Beispiel 4

Man verfährt wie in Beispiel 3, nur daß man 28,4 g Wachs C, 12,7 g IPDI T 1890 und 4,2 g DEAE verwendet. Das gelblich gefärbte Endprodukt besitzt einen Tropfpunkt von 104 °C, eine Penetrationszahl < 1 $mm.10^{-1}$ und eine Viskosität (bei 120 °C) von 120 mPas.

Emulgiert wird - wie in 1 b) beschrieben - "Wachs zu Wasser" mit 18 g Eisessig und 240 ml Wasser. Man erhält eine hochtransparente kationogene Wachsemulsion.

## Beispiel 5

Man verfährt wie in Beispiel 3, nur daß man 30,3 g Wachs F, 11,1 g IPDI T 1890 und 3,6 g DEAE verwendet. Das fast weiße bis gelbliche Endprodukt besitzt einen Tropfpunkt von 105 °C, eine Penetrationszahl von < 1 $mm.10^{-1}$ und eine Viskosität (bei 120 °C) von 100 mPas.

Emulgiert wird - wie in 1 b) beschrieben - "Wachs zu Wasser" mit 18 g Eisessig und 240 ml Wasser. Man erhält eine feinteilige, leicht transparente, kationogene Wachsemulsion.

## Beispiel 6

Man verfährt wie in Beispiel 3, nur daß man 23,2 g Wachs H gemeinsam mit 16,5 g IPDI T 1890 und 5,3 g DEAE verwendet. Das gelbliche Endprodukt besitzt einen Tropfpunkt von 99 °C, eine Penetrationszahl von 3 mm.$10^{-1}$ und eine Viskosität (bei 120 °C) von 200 mPas.

Emulgiert wird - wie in 1 b) beschrieben - "Wachs zu Wasser" mit 18 g Eisessig und 240 ml Wasser. Man erhält eine transparente kationogene Wachsemulsion.

Beispiel 7

Man verfährt wie in Beispiel 3, nur daß man 26,1 g Wachs B, 15 g N 3300 und 6,6 g DEAE verwendet. Das gelbliche Endprodukt besitzt einen Tropfpunkt von 100 °C, eine Penetrationszahl von 12 mm.$10^{-1}$ und eine Viskosität (bei 120 °C) von 170 mPas.

Emulgiert wird - wie in 1 b) beschrieben - "Wachs zu Wasser" mit 18 g Eisessig und 240 ml Wasser. Man erhält eine hochtransparente kationogene Wachsemulsion.

Beispiel 8 (nicht erfindungsgemäß)

Man schmilzt 38,1 g Wachs E mit 6 g Stearylamin bei 130 °C auf. Anschließend werden unter Rühren 9 g Eisessig zugegeben. Danach emulgiert man "Wachs zu Wasser", d. h. man läßt die Mischung unter starkem Rühren in 240 ml siedendes Wasser, dem unmittelbar zuvor ebenfalls 9 g Eisessig Zugesetzt wurden, einlaufen und kühlt unter weiterem Rühren auf Raumtemperatur ab.

Die Mischung ist nicht glatt emulgierbar!

Beispiel 9

Man verfährt wie in Beispiel 8, nur daß man zusätzlich 6,9 g IPDI T 1890 und 2,4 g DEAE - die wie in Beispiel 3 nacheinander zugesetzt werden - verwendet.

Man erhält eine transparente kationogene Wachsemulsion.

Beispiel 10

Man verfährt zunächst wie in Beispiel 3 und verwendet 11,25 g Wachs B, 8,55 g IPDI T 1890 und 2,7 g DEAE (halber Ansatz von Beispiel 3!). Anschließend gibt man in die Schmelze 22,5 g Wachs A hinzu und emulgiert die Mischung - wie in 1 b) beschrieben - "Wachs zu Wasser" mit 18 g Eisessig und 250 ml Wasser. Man erhält eine glatte, blaustichige kationogene Wachsemulsion.

Beispiel 11

270 g eines gemäß Beispiel 2 a) hergestellten kationaktiven Wachses werden pulverisiert, mit 1,5 g eines Emulgators (z. B. Alkylpolyglykolether) versetzt und anschließend in 840 ml Wasser feinverteilt. Bei 55 - 65 °C werden unter Rühren tropfenweise 70,5 g Dimethylsulfat und 2n-Natronlauge unter Aufrechterhaltung eines pH-Wertes von 8 - 8,5 zugegeben. Die Quarternierung ist beendet, wenn keine Natronlauge zur Stabilisierung des pH-Wertes mehr benötigt wird. Durch Aufkochen dieser Mischung erhält man eine feinteilige, leicht transparente Emulsion.

## Patentansprüche

**1.** Verfahren zur Herstellung kationaktiver Wachse, wobei man von einem Fischer-Tropsch- oder Polyethylenoxidat ausgeht, das ggf. vorher mit einem mehrwertigen Alkohol verestert wurde und wobei das Oxidat ein Molekulargewicht Mn zwischen 400 und 2000, vorzugsweise zwischen 400 und 1200, sowie einen Tropfpunkt zwischen 80 und 140 °C, vorzugsweise zwischen 90 und 120 °C sowie eine Säurezahl zwischen 0 und 50 mg KOH/g Wachs und eine Hydroxylzahl zwischen 5 und Ca. 200, vorzugsweise zwischen 10 und 100 mg KOH/g Wachs aufweist, wobei man

I. mit einem zwei- oder höherwertigen Isocyanat zu einem reaktiven, isocyanatgruppentragenden Wachs umsetzt und

II. dieses mit einem N,N-Dialkylethanolamin behandelt, wonach ggf. neutralisiert, quarternisiert oder zum Aminoxid oxidiert und anschließend ggf. kationogen in Wasser emulgiert wird.

**2.** Verfahren gemäß Anspruch 1,

dadurch gekennzeichnet,
daß man im Schritt I. bei 120 - 180 °C in der Schmelze arbeitet.

3. Verfahren gemäß den Ansprüchen 1 oder 2,
dadurch gekennzeichnet,
daß man ein aliphatisches Isocyanat einsetzt.

4. Verfahren gemäß den Ansprüchen 1 bis 3,
dadurch gekennzeichnet,
daß als zwei- oder höherwertiges Isocyanat Isophorondiisocyanat, Hexamethylendiisocyanat, 2.2.4- bzw. 2.2.6-Trimethylhexan-1.6-diisocyanat oder deren Trimere eingesetzt werden.

5. Verfahren gemäß den Ansprüchen 1 bis 4,
dadurch gekennzeichnet,
daß als N,N-Dialkylethanolamin das N,N-Diethylethanolamin verwendet wird.

6. Gemäß den Ansprüchen 1 bis 5 im Schritt I. hergestelltes reaktives Wachs.

7. Gemäß den Ansprüchen 1 bis 5 nach dem Schritt II. erhaltenes kationaktives Wachs.